# NEUE EUROPÄISCHE PATENTSCHRIFT

(11) **EP 0 210 548 B2**
(45) Veröffentlichungstag und Bekanntmachung des Hinweises auf die Entscheidung über den Einspruch: **04.05.1994**
(45) Hinweis auf die Patenterteilung: 26.10.1988
(21) Anmeldenummer: 86109799.6
(22) Anmeldetag: 17.07.1986
(51) Int. Cl.: B60H 1/00, B60H 1/24

(54) **Heiz- und/oder Klimaanlage für den Innenraum von Kraftfahzeugen, insbesondere Personen kraftwagen**
Heating and/or air conditioning device for a motor vehicle interior compartment, particularly for a passenger vehicle
Installation de chauffage et/ou de climatisation pour l'habitacle de véhicules à moteur, en particulier pour voitures

(30) Priorität: 20.07.1985 WO PCT/JP85/00361; 26.03.1986 DE 3610188
(43) Veröffentlichungstag der Anmeldung: 04.02.1987
(73) Patentinhaber: Bayerische Motoren Werke Aktiengesellschaft, 80788 München (DE)
(72) Erfinder: Busch, Lothar, D-8031 Gilching (DE)
(74) Vertreter: Bücken, Helmut

(56) Entgegenhaltungen:
- EP-A- 0 102 611
- DE-A- 3 102 068
- DE-A- 3 148 962
- DE-A- 3 232 957
- DE-A- 3 427 292
- DE-B- 2 012 000
- DE-U- 6 929 387
- GB-A- 1 602 825
- GB-A- 2 093 983
- Zeitschrift "Automotive Engineering" vom Juli 1982, Titelblatt, Seiten 79-81 und 82
- Bedienungsanleitung der Mercedes-Benz Fahrzeuge 200, 230E, 260E, 300E (Typenreihe W124) Seiten 18 und 19
- Technische Graphiken der Mercedes-Benz Fahrzeuge 200D-300E (Typenreihe W124) Blatt FG1137
- Bedienungsanleitung der Mercedes-Benz Fahrzeuge 200, 230, 250, Nr. ZKD 1.7625.K. Seiten 20,21

## Beschreibung

### Heiz- und/oder Klimaanlage für den Innraum von Kraftfahrzeugen

Die Erfindung bezieht sich auf eine Heiz- und/oder Klimaanlage einer Bauart mit den Merkmalen des Oberbegriffs des Patentanspruchs 1. Die DE-U 69 29 387 beschreibt eine Anlage dieser Bauart für Kraftfahrzeuge, bei der in der Mitte des Armaturenbrettes je ein eigener Luftaustrittskasten für den Fahrer und den Beifahrer vorgesehen ist, wobei jeder Luftaustrittskasten durch eine eigene Frischluftklappe mit dem Raum zwischen Gebläse und Wärmetauscher verbunden ist. Eine Warmluftklappe 17 stellt die Lufttemperatur an beiden Luftaustrittskästen ebenso wie an allen anderen Luftausströmern des Kraftfahrzeuges gemeinsam ein. Durch die zwei Frischluftklappen 8 kann dem Warmluftstrom individuell für beide Fahrzeugseiten Frischluft zugemischt werden, wodurch die an den Luftaustrittskästen austretende Luft unterschiedlich temperiert werden kann. Die Frischluftklappen 8 werden von je einer Einstellvorrichtung 10 verstellt, die auch mit einer weiteren Klappe verbunden ist, die eine Umschaltung zwischen Austrittsöffnungen mit großem und kleinem Gesamtquerschnitt an den Luftaustrittskästen bewirken.

Nachteilig bei der bekannten Belüftungs- und Heizungsanlage ist, daß mit der Wählvorrichtung 10 gleichzeitig mehrere Parameter verstellt werden: Mit der Zumischung von Kaltluft ändert sich nicht nur die Temperatur des Warmluftstroms aus dem Luftaustrittskasten, sondern auch die Menge der austretenden Luft. Für die Nachregulierung zum Erreichen eines konstanten Luftstromes muß der Gebläseschalter im zentralen Bedienteil betätigt werden, wodurch sich jedoch auch die austretende Luftmenge an den übrigen Luftausströmern des Fahrzeuges verändert. Ferner bewirkt ein Weiterdrehen der Wählvorrichtung 10 die Umschaltung auf die untere Austrittsöffnung 15 mit kleinerem Querschnitt. Gemäß dem in der Zeichnung der DE-U dargestellten Ausführungsbeispiel ist eine Richtungseinstellung des Luftstromes nur für die aus den unteren Austrittsöffnungen 15 austretende reine Kaltluft möglich.

Generell hat die bekannte Lüftungs- und Heizungsanlage somit den Nachteil, daß eine Betätigungseinrichtung gleichzeitig mehrere Funktionen erfüllt. Hierdurch wird der Einstellvorgang der Anlage erschwert und der Komfort der Fahrzeuginsassen beeinträchtigt. Ferner kann es zu Fehlbedienungen kommen. Die Zusammenfassung mehrerer Funktionen in einem Bedienelement kann auch dazu führen, daß die Einstellmöglichkeiten der Anlage vom Bediener nicht vollständig ausgeschöpft werden.

Der Erfindung liegt daher die Aufgabe zugrunde, für eine Heiz- und/oder Klimaanlage Bedienelemente bereitzustellen, mit denen Richtung, Menge und Temperatur der zum Kopfbereich austretenden Luft in einfacher, übersichtlicher und selbsterklärender Weise eingestellt werden können.

Diese Aufgabe wird durch die kennzeichnenden Merkmale des Anspruchs 1 gelöst.
Grundgedanke ist es hierbei, getrennte Bedienelemente für einerseits die Menge und andererseits die Temperatur der zum Kopfbereich austretenden Luft vorzusehen und diese in bedienerfreundlicher Weise selbsterklärend im Bereich der Luftaustrittsötfnunq anzubringen, während alle übrigen Einstellelemente in einem Bedienteil zentral zusammengefaßt angeordnet sind.

Aus der Bedienungsanleitung der Mercedes-Benz-Typen 200 bis 300 E (Typenreihe W 124) ist ein Heiz- und/oder Klimaanlage bekannt, welche Luftausströmer zum Fußbereich, zum Kopfbereich und zum Scheibenbereich aufweist. Weiterhin sind Bedienungselemente in einem Bedienteil vorgesehen, über die die Temperatur der ausströmenden Luft, deren Intensität (Gebläse) sowie die Luftverteilung eingestellt werden können. Weiterhin weisen die Luftausströmer zum Kopfbereich separate Bedienelemente auf, mit denen die dort austretende Luft in ihrer Richtung und Menge zusätzlich beeinflußt werden kann.

Nachteilig bei einer derartigen Anordnung ist es, daß an den Luftausströmern zum Kopfbereich nur nicht beheizbare Frischluft austreten kann, wie dies ausdrücklich auf Seite 19 unter Ziffer 5 und 6 der Bedienungsanleitung erwähnt wird.

Aus der DE-A-32 32 957 ist es bekannt, bei einer Heiz- und/oder Klimaanlage geräteseitig eine Möglichkeit vorzusehen, den Luftausströmer zum Kopfbereich erwärmte Luft zuzuführen. Hierbei kann die erwärmte Luft mit Kaltluft gemischt werden, so daß an den Luftausströmern zum Kopfbereich die Luft mit niedrigerer Temperatur als an den übrigen Luftausströmern ausströmen kann.

Ein Angabe, wo die entsprechenden Bedienelemente hierfür anzuordnen sind, ist der DE-A-32 32 957 nicht zu entnehmen.

Aus der Zeitschrift "Automotive Engineering", Juli 1982, Seite 82, ist es ganz allgemein bekannt, Temperatureinstellelemente im Bereich eines Luftausströmers zum Kopfbereich vorzusehen. Mit diesen Einstellelementen (Bedienelementen) wird die Temperatureinstellung für die gesamte Beifahrerseite gesteuert, also für alle Luftausströmer auf dieser Fahrzeugseite. Diesem Zeitschriftenaufsatz ist nicht zu entnehmen, ob ein zusätzliches Bedienteil mit manuell betätigbaren Wählvorrichtungen vorgesehen ist.

Die DE-A-31 02 068 zeigt insbesondere in ihren Fig. 2 und 3 Luftausströmer mit Bedienelementen. Diese Bedienelemente sind jedoch die einzigen Bedienelemente für die gesamte Heiz- und/oder Klimaanlage. Bedienelemente in einem separaten Bedienteil - wie aus der Bedienungsanleitung der Mercedes-Benz-Typen 200 bis 300 E bekannt - sind hier nicht vorgesehen. Eine unterschiedliche Temperierung der aus den Luftausströmern zum Kopfbereich ausströmenden Luft ist hier nicht möglich.

Die Patentansprüche 2 bis 6 enthalten vorteilhafte Weiterbildung der Erfindung.

So ermöglicht die Weiterbildung der Erfindung nach Anspruch 2 bezüglich der Aufprallsicherheit als auch der Formgebung eine vorteilhafte Lösungsmöglichkeit. Dies liegt darin begründet, daß die vorgesehenen Bedienungselemente in die Armaturenbrettkonstruktion ohne Überstand eingebettet und der Gesamtform der Ausströmer angepaßt werden kann.

In der Zeichnung ist ein Ausführungsbeispiel der Erfindung dargestellt. Es zeigen:

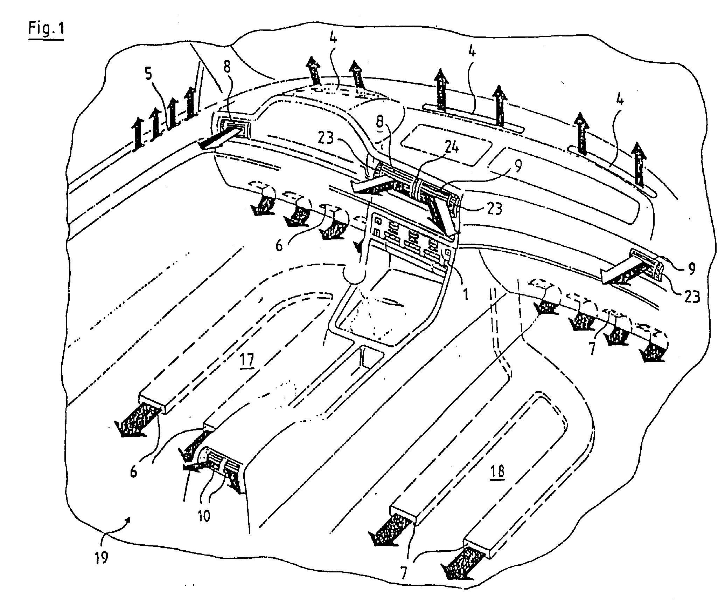

Fig. 1 eine Innenraum-Ansicht eines Personenkraftwagens mit den Luftausström-Öffnungen der Heiz- und Kühlluft in den Fahrzeuginnenraum,
Fig. 2 ein Heiz- und Klimagerät für den Innenraum nach Fig. 1 im Schnitt und
Fig. 3 zwei mittlere Luftausströmer zum Kopfbereich entsprechend Fig. 1 in vergrösserter Teilansicht.

Ein Bedienelement 1 für eine PersonenkraftwagenHeiz- und -Klimaanlage 2 mit einem Heiz- und Klimagerät 3 und mehreren Heiz- und Kühlluft-Ausströmern 4 bis 10 zum Frontscheiben-Entfrosten (4), Seitenscheiben-Entfrosten (5), Fussraum- und Fondraum-Fahrerseite-Heizen (6), Fussraum- und Fondraum-Beifahrerseite-Heizen (7), Belüften-Fahrerseite (8), Belüften-Beifahrerseite (9) und Belüften-Fondraum (10), weist manuell betätigbare Wählvorrichtungen auf, die die Heiz- und/oder Kühlluft-Einströmung in ihrer Temperatur, Intensität und Verteilung bestimmen.

Zum Sicherstellen der vorstehend beschriebenen Funktionen enthält das Heiz- und Klimagerät 3 die üblichen Hauptbauteile, ein mehrteiliges Gehäuse 11, ein Luft-Gebläse 12, einen in einen nicht dargestellten Kältemittelkreis einbezogenen Verdampfer 13, einen in einen nicht dargestellten Brennkraftmaschinen-Kühlkreis einbezogenen Wärmetauscher 14, Luft-Kanäle mit Luft-Ausströmern und Steuerklappen, elektrische, pneumatische oder gleichwertig betätigbare Stellmotoren 16, Aussen-, Innenraum- und Kühlmittel-Temperatur-Sensoren 17, 18 und 19, Temperatur-Stellwertgeber und elektrische Schalter zu den Drucktasten im Bedienteil 1.

Ein gleichfalls am Bedienteil 1 oder auch an anderer gut wartungszugängiger Innenraum-Stelle angeordnetes elektrisches und elektronisches Steuergerät 20 verknüpft die von den Gebern, Sensoren und Schaltern eingehenden Signalwerte und gibt programmgemässe Stellsignale auf die Stellmotoren 16, die die jeweiligen Einstellorgane in die entsprechenden für die fahrer- und beifahrerseitigen Innenraumhälften gleichen bzw. zum Teil unterschiedlichen Stellungen bringen.

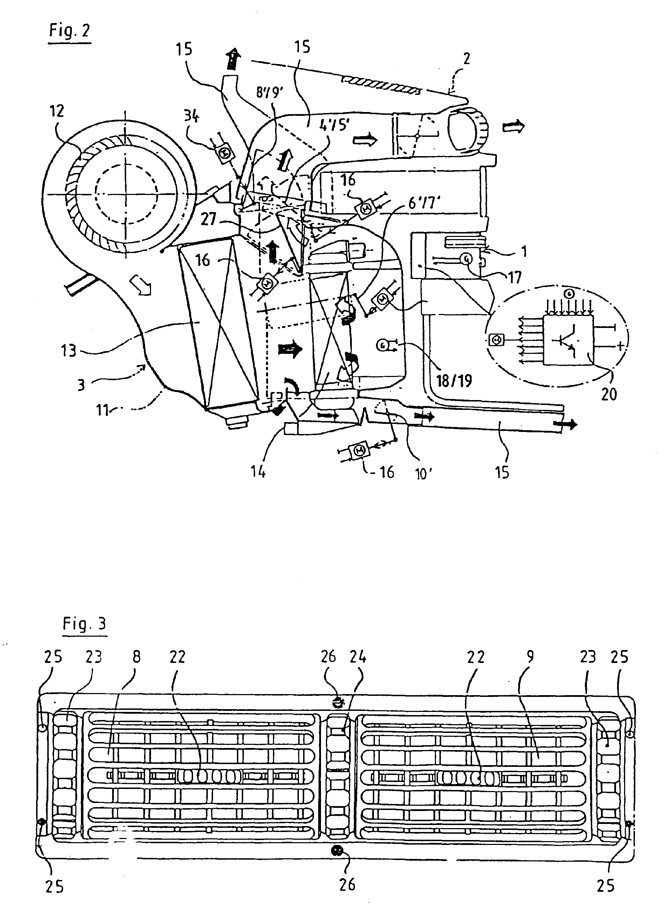

Insgesamt ermöglicht die erfindungsgemässe Heiz- und Klimaanlage eine Klimatisierung eines Fahrzeug-lnnenraumes, die auch stark unterschiedlichen Anforderungen von Fahrer und Beifahrer bezüglich ihrer Temperatur- und Luftzug-Empfindungen gerecht wird. Zu diesem Zweck lassen sich die zum Kopfbereich der Insassen einstellbaren Luftausströmer 8 und 9 zum Belüften-Fahrerseite und -Beifahrerseite in ihrer Luft-Strömungsrichtung, -Menge und Temperatur einstellen. Gemäss Figur 3 ist mittig in jedem Luftausströmer 8 und 9 zur horizontalen und vertikalen Strahlrichtungs-Einstellung ein Bedienkopf 22 und zur Luftmengen-Einstellung unmittelbar seitlich neben jedem Luftausströmer 8 und 9 ein vertikal einstellbares Bedienrad 23 angeordnet.

Für die Wahl der Luft-Temperatur ist allen Luftausströmern 8 und 9 gemeinsam ein ebenfalls vertikal einstellbares Bedienrad 24 zugeordnet, das zwischen den beiden mittigen Luftausströmern 8 und 9 angeordnet ist. Die Bedienräder 23 und 24 sind mit Einstell-Symbolen 25 bzw. 26 versehen, die die Verstellbewegung nach oben und unten mit steigender und fallender Luftmenge bzw. Lufttemperatur kennzeichnen.

Die Einstellung des Bedienrades 24 bewirkt über eine nicht dargestellte mechanische, pneumatische, hydraulische und/oder elektrisch/elektronische Fernbetätigung den Öffnungswinkel einer Mischklappe 27, die im Heiz- und Klimagerät 3 gemäss Figur 2 ein anteiliges Öffnen einer Frischluft-/Kaltluft-Öffnung einerseits und einer Heizluft-Öffnung andererseits bestimmt.

## Patentansprüche

1. Heiz- oder Klimaanlage für den Innenraum von Kraftfahrzeugen, insbesondere Personenkraftwagen mit Luftausströmern zum Fußbereich (6 und 7), Kopfbereich (8 und 9) und Scheibenbereich (4 und 5), denen in einem Bedienteil (1) manuell betätigbare Wählvorrichtungen zugeordnet sind, die die Heiz- und/oder Kühllufteinströmung in ihrer Temperatur, Intensität und Verteilung bestimmen und die die Lufttemperatur für die Luftausströmer zum Scheiben-, Kopf- und Fußbereich gemeinsam einstellen, wobei den Luftauströmmern zum Kopfbereich (8 und 9) zusätzliche Bedienelemente (22) und Einstellvorrichtungen zugeordnet sind, die innerhalb und/oder am Randbereich der Öffnungen von im Mittelteil der Armaturenbretts angeordneten Luftausströmern (8 und 9) angeordnet sind, wobei erste Bedienelemente (22) die Richtung der ausströmenden Luft bestimmen und mit den Einstellvorrichtungen unter anderem die Lufttemperatur zum Kopfbereich allein abweichend von der Lufttemperatur zum Fuß- und Scheibenbereich auf niedrigere Werte durch Mischen von Kaltluft und Warmluft einstellbar ist, dadurch gekennzeichnet, daß die Einstellvorrichtungen aus separaten Bedienelementen (23, 24) bestehen, derart, daß einerseits mit je einem zweiten Bedienelement (23) die Menge der aus den Luftausströmern (8,9) für den Kopfbereich ausströmenden Luft bestimmt wird und daß andererseits an den im Mittelteil des Armaturenbrettes angeordneten Luftausströmern (8, 9) ein für alle Luftausströmer (8 und 9) zum Kopfbereich gemeinsames drittes Bedienelement (Bedienrad 24) für die Temperatur vorgesehen ist.

2. Anlage nach Anspruch 1,
dadurch gekennzeichnet, daß die Bedienelemente für die Menge (23) jeweils an den seitlichen Rändern aller Luftausströmer (8, 9) für den Kopfbereich angeordnet und diesen jeweils funktionsmäßig zugeordnet sind und zwischen zwei mittleren, im Armaturenbrett nebeneinander angeordneten Luftausströmern (8 und 9) an deren seitlichen inneren Rändern das für alle Luftausströmer (8 und 9) gemeinsame Bedienelement (24) für die Temperatur vorgesehen ist, wobei an den beiden mittleren Luftausströmern (8, 9) die Bedienelemente (23) für die Menge an den äußeren Rändern angeordnet sind.

3. Anlage nach Anspruch 2,
dadurch gekennzeichnet, daß die Bedienelemente für die Menge und Temperatur als vertikal angeordnete Bedienräder (23 bzw. 24) ausgebildet sind, die eine freiliegende gerändelte Umfangs-Außenfläche entsprechend der Bauhöhe der zugeordneten Luftausströmer (8 und 9) aufweisen.

4. Anlage nach einem der Ansprüche 1 bis 3,
dadurch gekennzeichnet, daß die Bedienelemente für die Menge (Bedienrad 23) eine aufwärts gerichtete Stellrichtung für größere Menge aufweisen und das Bedienelement für die Temperatur (Bedienrad 24) eine aufwärts gerichtete Stellrichtung für höhere Temperatur aufweist.

5. Anlage nach einem der Ansprüche 1 bis 4,
dadurch gekennzeichnet, daß mit dem ersten Bedienelement (Bedienknopf 22) eine allseitige Verstellung für die vertikale und horizontale Luft-Strömungs- richtung in der durch Richtlamellen unterteilten Ausströmeröffnung möglich ist.

6. Anlage nach einem der Ansprüche 1 bis 5,
dadurch gekennzeichnet, daß das Bedienelement (Bedienrad 24) für die Temperatur der zum Kopfbereich ausströmenden Luft mittels mechanischer, pneumatischer, elektrischer und/oder elektronischer Steuer- und Verbindungs-Elemente die Einstellung. einer Mischklappe (27) für eine Frischluft oder Kaltluft-Öffnung einerseits und eine Heizluft-Öffnung andererseits zu mindestens einer zu den Luftausströmern (8 und 9) führenden Luftleitung bestimmen.

## Revendications

1. Installation de chauffage ou de climatisation pour l'habitacle de véhicules à moteur, en particulier pour voitures particulières, avec des évacuations d'air pour la zone des pieds (6 et 7), la zone de tête (8 et 9) et la zone des vitres (4 et 5), auxquels sont associés dans un organe de commande (1) des dispositifs sélectifs actionnables manuellement, qui déterminent l'afflux d'air chaud et/ou d'air froid en température, intensité et répartition et réglent la température de l'air des sorties pour la zone des vitres, la zone de tête et la zone des pieds, installation dans laquelle sont associés aux sorties d'air pour la zone de tête (8 et 9) des éléments de commande supplémentaires (22) et des dispositifs de réglage, qui sont disposés à l'intérieur et/ou sur la zone de bord des ouvertures des sorties d'air (8 et 9) placées dans la zone centrale du tableau de bord, et dans laquelle des premiers éléments de commande (22) déterminent le sens de l'air s'évacuant et par les dispositifs de réglage entre autre la température de l'air pour la zone de tête seule peut être réglée différemment de la température de l'air pour la zone des pieds ou des vitres à des valeurs plus faibles, au moyen du mélange d'air froid et d'air chaud, caractérisée en ce que les dispositifs de réglage se composent d'éléments de commande séparés (23, 24) de manière que d'une part avec respectivement un deuxième élément de commande (23) la quantité de l'air passant par les sorties d'air (8, 9) pour la zone de tête soit déterminée et que d'autre part sur les sorties d'air (8, 9) disposées dans la partie moyenne du tableau de bord soit prévu un troisième élément de manoeuvre (molette 24) commun à toutes les sorties d'air (8 et 9) pour la zone de tête.

2. Installation selon la revendication 1, caractérisée en ce que les éléments de manoeuvre pour le débit (23) sont placés respectivement sur les bords latéraux de toutes les sorties d'air (8, 9) pour la zone de tête et sont coordonnés fonctionnellement et respectivement à ceux-ci et il est prévu entre deux sorties centrales d'air (8 et 9) placées l'une près de l'autre dans le tableau de bord sur leurs bords latéraux internes l'élément de manoeuvre (23) pour le débit étant placés sur les bords extérieurs des deux évacuations d'air centrales (8, 9).

3. Installation selon la revendication 2, caractérisée en ce que les éléments de manoeuvre pour le débit et la température sont réalisés comme des molettes de commande (23, 24) placées verticalement qui comportent une surface extérieure périphérique dégagée molletée correspondant à la hauteur des sorties d'air associées.

4. Installation selon une des revendications 1 à 3, caractérisée en ce que les éléments de manoeuvre pour le débit (molette de commande 23) comportent un sens de réglage dirigé vers le haut pour les plus grands débits et l'élément de manoeuvre pour la température (molette de commande 24) un sens de réglage dirigé vers le haut pour les températures plus élevées.

5. Installation selon une des revendications 1 à 4, caractérisée en ce qu'avec le premier élément de manoeuvre (tête de commande 22) un réglage polydirectionnel pour la direction verticale et horizontale du flux d'air est possible dans l'ouverture de sortie subdivisée par des lamelles.

6. Installation selon une des revendications 1 à 5, caractérisée en ce que l'élément de commande (molette de commande 24) détermine pour la température de l'air se dirigeant vers la zone de tête au moyen d'éléments de commande et de liaison mécanique, pneumatique, électrique et/ou électronique, le réglage d'un volet mélangeur (27) pour une ouverture d'air frais ou d'air froid d'une part et une ouverture d'air chaud d'autre part destinées à une conduite d'air menant aux évacuations d'air (8 et 9).

## Claims

1. A heating or air-conditioning system for the interior of motor vehicles, especially passenger cars, with air outlets to the foot region (6 and 7), head region (8 and 9) and windscreen region (4 and 5), to which are assigned manually-operable selecting devices housed in an operating panel (1), the said selecting devices determining the temperature, intensity and distribution of the hot and/or cold air flow and by means of which the air temperature for the air outlets to the windscreen, head and foot regions can be set jointly, wherein additional operating elements (22) and adjusting devices, arranged within and/or at the peripheral areas of the apertures of the air outlets (8 and 9) in the central part of the dashboard, are assigned to the air outlets to the head region (8 and 9), with the first control elements (22) determining the direction of the outflowing air and the adjusting devices enabling, inter alia, the air temperature to the head region alone to be set to lower values separately from the air temperature to the foot and windscreen regions through the mixing of cold air and warm air, characterised in that the adjusting devices comprise separate control elements (23, 24) such that, on the one hand, a second control element (23) enables the quantity of air flowing out of the air outlets (8, 9) to the head region to be determined and, on the other hand, a third control element (control wheel 24) is arranged on the air outlets (8, 9) in the central part of the dashboard to control the temperature jointly for all air outlets (8, 9) to the head region.

2. A system according to claim 1,
characterised in that the control elements for the quantity (23) are in each case arranged on the lateral edges of all air outlets (8, 9) for the head region and are functionally assigned to them, and that the control element (24) for temperature for all air outlets (8 and 9) jointly is arranged on the lateral inner edges of the two central air outlets (8 and 9) lying adjacent to each other in the dashboard, the control elements (23) for air quantity being arranged on the outer edges of the two central air outlets (8, 9).

3. A system according to claim 2,
characterised in that the control elements for quantity and temperature are in the form of vertically-arranged control wheels (23 and 24) which have an exposed, knurled outer circumferential surface corresponding to the installation height of the assigned air outlets (8 and 9).

4. A system according to any one of claims 1 to 3,
characterised in that the control elements for quantity (control wheel 23) have an upwardly-directed directional setting for greater air quantity and that the control element for temperature (control wheel 24) has an upwardly-directed directional setting for higher temperature.

5. A system according to any one of claims 1 to 4,
characterised in that the first control element (control knob 22) permits all-round adjustment of the vertical and horizontal air flow directions through the air outlet aperture partitioned through directional lamellae.

6. A system according to any one of claims 1 to 5,
characterised in that the control element (control wheel 24) for the temperature of air flowing to the head region determines, by mechanical, pneumatic, electrical and/or electronic control and connection elements, the setting of a mixing flap (27) for a fresh air or cold air aperture on the one hand and a warm air aperture on the other hand to at least one air duct leading to the air outlets (8 and 9).
